(19) Europäisches Patentamt

European Patent Office

Office européen des brevets

(11) **EP 1 153 927 B1**

(12) **EUROPÄISCHE PATENTSCHRIFT**

(45) Veröffentlichungstag und Bekanntmachung des Hinweises auf die Patenterteilung:
**21.12.2005 Patentblatt 2005/51**

(51) Int Cl.$^7$: **C07F 7/18**

(21) Anmeldenummer: **01111617.5**

(22) Anmeldetag: **12.05.2001**

(54) **Verfahren zur Herstellung von gelbem Bis(3-[triethoxysilyl]propyl)tetrasulfan**

Process for preparing yellow bis(3-[triethoxysilyl]propyl)tetrasulfan

Procédé pour la préparation de triethoxysilyl]propyl)tétrasulfan jaune

(84) Benannte Vertragsstaaten:
**BE DE FR IT NL**

(30) Priorität: **13.05.2000 DE 10024037**

(43) Veröffentlichungstag der Anmeldung:
**14.11.2001 Patentblatt 2001/46**

(73) Patentinhaber: **Degussa AG**
**40474 Düsseldorf (DE)**

(72) Erfinder:
• **Krafczyk, Roland, Dr.**
**79618 Rheinfelden (DE)**
• **Deschler, Ulrich, Dr.**
**63877 Sailauf (DE)**
• **Michel, Rudolf**
**63579 Freigericht (DE)**

(56) Entgegenhaltungen:
**DE-A- 2 141 159**

## Beschreibung

Die Erfindung betrifft die Herstellung von gelbem Bis(3-[triethoxysilyl]propyl)tetrasulfan.

Aus DE 21 41 159 ist die Herstellung von Bis(3-[triethoxysilyl]propyl)tetrasulfan (Si 69) durch Umsetzung von Chlorpropyltriethoxysilan mit Natriumpolysulfid (NPS) bekannt. Das verwendete Chlorpropyltriethoxysilan kann durch Ethanolyse von Chlorpropyltrichlorsilan hergestellt werden. Dabei wird nach bekannten Verfahren, wie in DE 20 61 189 und DE 32 36 628 beschrieben, ein vollständig umgesetztes Produkt mit einem nur sehr geringen Anteil an Chlorpropylmonochlordiethoxysilan erhalten. Dieses vollständig umgesetzte Chlorpropyltriethoxysilan wird im folgenden "neutral" genannt.

Wird das neutrale Chlorpropyltriethoxysilan mit Natriumpolysulfid oder $Na_2S$ und Schwefel zur Herstellung von Bis(3-[triethoxysilyl]propyl)tetrasulfan nach dem Verfahren beschrieben in DE 21 41 159 umgesetzt, so wird ein dunkelgelb bis rot gefärbtes Produkt (Iodfarbzahl $\geq$ 20 mg Iod/100 ml) erhalten. Am Markt eingeführt ist jedoch ein hellgelbes Produkt, das aus neutralem Chlorpropyltriethoxysilan nicht zugänglich ist. Um hellgelbes Bis(3-[triethoxysilyl]propyl)tetrasulfan (Iodfarbzahl $\leq$ 10 mg Iod/100 ml) zu erhalten, muß im Chlorpropyltriethoxysilan ein sogenannter Restsäuregehalt in Form von Chlorpropylmonochlordiethoxysilan vorhanden sein. Dies kann dadurch erreicht werden, daß die Ethanolysereaktion nicht vollständig zu Ende geführt wird. Diese Maßnahme bedingt in der betrieblichen Praxis jedoch einen nicht unerheblichen Mehraufwand, insbesondere deshalb, weil der Restsäuregehalt in einem sehr engen Bereich gehalten werden muß, die Reaktion also sehr gezielt an einem bestimmten Punkt kurz vor vollständigem Umsatz abgebrochen werden muß.

Auch eine Ansäuerung des neutralen Chlorpropyltriethoxysilans mit alkoholischer Salzsäure vor der Reaktion mit den genannten Schwefelungsagentien führt nicht zu hellgelb gefärbtem Bis(3-[triethoxysilyl]propyl)tetrasulfan, sondern ebenfalls zu dunkelgelb bis rot gefärbtem.

Der Nachteil dieser bekannten Verfahren besteht darin, daß ein Produkt mit dunkelgelber bis roter Farbe erhalten wird.

Aufgabe der Erfindung ist es, ein alternatives Verfahren bereitzustellen, mit dessen Hilfe man ein gelbes Bis(3-[triethoxysilyl]propyl)tetrasulfan erhält.

Gegenstand der Erfindung ist ein Verfahren zur Herstellung von gelbem Bis(3-[triethoxysilyl]propyl)tetrasulfan mit einer Iodfarbzahl von $\leq$ 10 mg Iod/100 ml, vorzugsweise 5-7 mg Iod/100 ml, welches dadurch gekennzeichnet ist, daß man zu neutralem Chlorpropyltriethoxysilan Chlorpropyltrichlorsilan gibt und anschließend mit Natriumpolysulfid oder $Na_2S$ und Schwefel in Ethanol umsetzt.

Die Zugabe von geringen Mengen an Chlorpropyltrichlorsilan zu neutralem Chlorpropyltriethoxysilan kann zur Bildung von geringen Mengen an Chlorpropylmonochlordiethoxysilan und Chlorpropyldichlormonoethoxysilan führen (1).

$$(EtO)_3Si\text{-}R + Cl_3Si\text{-}R \rightarrow (EtO)_2ClSi\text{-}R + (EtO)Cl_2\,Si\text{-}R \tag{1}$$

mit $R = (CH_2)_3Cl$

Die Bildung von Chlorpropylmonochlordiethoxysilan und Chlorpropyldichlormonoethoxysilan, selbst bei Abwesenheit eines Lösungsmittels wie zum Beispiel Ethanol, kann durch GC-MS Untersuchungen bestätigt werden.

Dieses Verfahren hat den Vorteil, daß die Ethanolysereaktion nicht sehr gezielt an einem bestimmten Punkt kurz vor vollständigem Umsatz abgebrochen werden muß, sondern bis zur vollständigen Umsetzung zu neutralem Chlorpropyltriethoxysilan durchgeführt werden kann. Die für die Herstellung von hellgelbem Bis(3-[triethoxysilyl]propyl)tetrasulfan erforderliche kleine Menge an Chlorpropylmonochlordiethoxysilan kann einfach durch Zugabe von Chlorpropyltrichlorsilan zu neutralem Chlorpropyltriethoxysilan erreicht werden.

Die Dosierreihenfolge ist unerheblich. Man kann Chlorpropyltrichlorsilan zu einer Lösung aus neutralem Chlorpropyltriethoxysilan und Ethanol geben oder Chlorpropyltrichlorsilan zu neutralem Chlorpropyltriethoxysilan geben und danach Ethanol zugeben.

Chlorpropyltrichlorsilan kann in Mengen von 0,1 - 20 Gew.-%, vorzugsweise 0,5 - 5 Gew.-%, besonders bevorzugt 0,8-1,2 Gew.-%, bezogen auf Chlorpropyltriethoxysilan, zugegeben werden.

Die Reaktionsmischung kann vor Zugabe von Natriumpolysulfid oder $Na_2S$ und Schwefel erwärmt werden, vorzugsweise auf Temperaturen von 20 - 90 °C.

Bis(3-[triethoxysilyl]propyl)tetrasulfan, hergestellt nach dem erfindungsgemäßen Verfahren, hat eine Iodfarbzahl von $\leq$ 10 mg Iod/100 ml.

Beispiele

Beispiel 1:

Bei Raumtemperatur werden zu einer Lösung aus 240,8 g Chlorpropyltriethoxysilan (neutral) in 200 ml Ethanol 2,4 g Chlorpropyltrichlorsilan getropft. Anschließend wird 1 h lang bei 82 °C unter Rühren am Rückfluß gekocht. Nach Abkühlen auf 60 °C werden 87,1 g Natriumpolysulfid zugegeben und das Reaktionsgemisch 1,5 h lang bei 82 °C unter Rühren am Rückfluß gekocht. Nach Abkühlen auf Raumtemperatur wird vom ausgefallenen Natriumchlorid abfiltriert und das Ethanol am Rotationsverdampfer entfernt. Eine nachfolgende Filtration liefert 256,1 g hellgelbes Bis (3-[triethoxysilyl]propyl)tetrasulfan mit einer Iodfarbzahl von 5-7 mg Iod/100 ml.
$^1$H-NMR (CDCl$_3$) :δ 0,75 (m, 6 H, Si-(C$\underline{H}_2$)-(CH$_2$)-(CH$_2$)-S), 1,22 (t, $^3$J(HH)= 14 Hz, 18 H, Si-O-CH$_2$-C$\underline{H}_3$), 1,72 - 1,95 (m, 6 H, Si-(CH$_2$)-(C$\underline{H}_2$)-(CH$_2$)-S), 2,65 - 3,06 (m, Si-(CH$_2$)-(CH$_2$)-(C$\underline{H}_2$)-S), 3,82 (q, $^3$J(HH)= 14 Hz, 12 H, Si-O-C$\underline{H}_2$-CH$_3$).

Beispiel 2:

Bei Raumtemperatur werden zu 240,8 g Chlorpropyltriethoxysilan (neutral) 2,4 g Chlorpropyltrichlorsilan getropft. Anschließend wird 1 h lang bei 80 °C gerührt. Nach Zugabe von 200 ml Ethanol, die Temperatur fällt auf 62 °C ab, werden 87,1 g Natriumpolysulfid zugegeben und das Reaktionsgemisch 1,5 h lang bei 82 °C unter Rühren am Rückfluß gekocht. Nach Abkühlen auf Raumtemperatur wird vom ausgefallenen Natriumchlorid abfiltriert und das Ethanol am Rotationsverdampfer entfernt. Eine nachfolgende Filtration liefert 257,3 g hellgelbes Bis(3-[triethoxysilyl]propyl) tetrasulfan mit einer Iodfarbzahl von 7-10 mg Iod/100 ml.
$^1$H-NMR (CDCl$_3$) : δ 0,75 (m, 6 H, Si-(C$\underline{H}_2$)-(CH$_2$)-(CH$_2$)-S), 1,22 (t, $^3$J(HH)= 14 Hz, 18 H, Si-O-CH$_2$-C$\underline{H}_3$), 1,72 - 1,95 (m, 6 H, Si-(CH$_2$)-(C$\underline{H}_2$)-(CH$_2$)-S), 2,65 - 3,06 (m, Si-(CH$_2$)-(CH$_2$)-(C$\underline{H}_2$)-S), 3,82 (q, $^3$J(HH)= 14 Hz, 12 H, Si-O-C$\underline{H}_2$-CH$_3$).

Beispiel 3:

Bei Raumtemperatur werden zu einer Lösung aus 1122 kg Chlorpropyltriethoxysilan (neutral) in 950 kg Ethanol 11,4 kg Chlorpropyltrichlorsilan gegeben. Anschließend wird 30 min. lang bei Raumtemperatur gerührt. Danach werden 390 kg Natriumpolysulfid zugegeben und das Reaktionsgemisch 1 h lang bei 82 °C unter Rühren am Rückfluß gekocht. Nach Abkühlen auf Raumtemperatur wird vom ausgefallenen Natriumchlorid abfiltriert und das Ethanol im Vakuum entfernt. Eine nachfolgende Filtration liefert 1250 kg hellgelbes Bis(3-[triethoxysilyl]propyl)tetrasulfan mit einer Iodfarbzahl von 5-7 mg Iod/100 ml.
$^1$H-NMR (CDCl$_3$) : δ 0,75 (m, 6 H, Si-(C$\underline{H}_2$)-(CH$_2$)-(CH$_2$)-S), 1,22 (t, $^3$J(HH)= 14 Hz, 18 H, Si-O-CH$_2$-C$\underline{H}_3$), 1,72 - 1,95 (m, 6 H, Si-(CH$_2$)-(C$\underline{H}_2$)-(CH$_2$)-S), 2,65 - 3,06 (m, Si-(CH$_2$)-(CH$_2$)-(C$\underline{H}_2$)-S), 3,82 (q, $^3$J(HH)= 14 Hz, 12 H, Si-O-C$\underline{H}_2$-CH$_3$).

Beispiel 4

Bei Raumtemperatur werden zu einer Lösung aus 481,6 g Chlorpropyltriethoxysilan (neutral) in 450 ml Ethanol 4,8 g Chlorporpyltrichlorsilan getropft. Anschließend wird 1 h lang bei 80 °C unter Rühren am Rückfluß gekocht. Nach Abkühlen auf 58 °C werden 89,8 g Natriumsulfid und 105,8 g Schwefel zugegeben und das Reaktionsgemisch 1,5 h lang bei 82 °C unter Rühren am Rückfluß gekocht. Nach Abkühlen auf Raumtemperatur wird vom ausgefallenen Natriumchlorid abfiltriert und das Ethanol am Rotationsverdampfer entfernt. Eine nachfolgende Filtration liefert 500,4 g hellgelbes Bis(3-[triethoxysilyl]propyl)tetrasulfan mit einer Iodfarbzahl von 5-7 mg Iod/100 ml).
$^1$H-NMR (CDCl$_3$) : δ 0,75 (m, 6 H, Si-(C$\underline{H}_2$)-(CH$_2$)-(CH$_2$)-S), 1,22 (t, $^3$J(HH)= 14 Hz, 18 H, Si-O-CH$_2$-C$\underline{H}_3$), 1,72 - 1,95 (m, 6 H, Si-(CH$_2$)-(C$\underline{H}_2$)-(CH$_2$)-S), 2,65 - 3,06 (m, Si-(CH$_2$)-(CH$_2$)-(C$\underline{H}_2$)-S), 3,82 (q, $^3$J(HH)= 14 Hz, 12 H, Si-O-C$\underline{H}_2$-CH$_3$).

Beispiel 5 (Vergleichsbeispiel 1):

Bei 60 °C werden zu einer Lösung aus 240,8 g Chlorpropyltriethoxysilan (neutral) in 200 ml Ethanol 87,1 g Natriumpolysulfid zugegeben und das Reaktionsgemisch 1,5 h lang bei 82 °C unter Rühren am Rückfluß gekocht. Nach Abkühlen auf Raumtemperatur wird vom ausgefallenen Natriumchlorid abfiltriert und das Ethanol am Rotationsverdampfer entfernt. Eine nachfolgende Filtration liefert 255,0 g rotes Bis(3-[triethoxysilyl]propyl)tetrasulfan mit einer Iodfarbzahl von > 20 mg Iod/100 ml.
$^1$H-NMR (CDCl$_3$) : δ 0,75 (m, 6 H, Si-(C$\underline{H}_2$)-(CH$_2$)-(CH$_2$)-S), 1,22 (t, $^3$J(HH)= 14 Hz, 18 H, Si-O-CH$_2$-C$\underline{H}_3$), 1,72 - 1,95 (m, 6 H, Si-(CH$_2$)-(C$\underline{H}_2$)-(CH$_2$)-S), 2,65 - 3,06 (m, Si-(CH$_2$)-(CH$_2$)-(C$\underline{H}_2$)-S), 3,82 (q, $^3$J(HH)= 14 Hz, 12 H, Si-O-C$\underline{H}_2$-CH$_3$).

Beispiel 6 (Vergleichsbeispiel 2):

Bei Raumtemperatur werden 240,8 g Chlorpropyltriethoxysilan (neutral) in 200 ml Ethanol vorgelegt. Anschließend werden 30 ml einer 1-molaren Ethanolischen HCl-Lösung zugegeben und 30 min. lang bei RT gerührt. Nach Zugabe von 87,1 g Natriumpolysulfid wird das Reaktionsgemisch 1,5 h lang bei 82 °C unter Rühren am Rückfluß gekocht. Nach Abkühlen auf Raumtemperatur wird vom ausgefallenen Natriumchlorid abfiltriert und das Ethanol am Rotationsverdampfer entfernt. Eine nachfolgende Filtration liefert 253,5 g rotes Bis(3-[triethoxysilyl]propyl)tetrasulfan mit einer Iodfarbzahl von > 20 mg Iod/100 ml.

Beispiel 7 (Vergleichsbeispiel 3):

Bei 60 °C werden zu einer Lösung aus 481,6 g Chlorpropyltriethoxysilan (neutral) in 450 ml Ethanol 89,8 g Natriumsulfid und 105,8 g Schwefel zugegeben und das Reaktionsgemisch 1,5 h bei 82 °C unter Rühren am Rückfluß gekocht. Nach Abkühlen auf Raumtemperatur wird vom ausgefallenen Natriumchlorid abfiltriert und das Ethanol am Rotationsverdamper entfernt. Eine nachfolgende Filtration liefert 496,3 g rotes Bis (3-[triethoxysilyl]propyl)tetrasulfan mit einer Iodfarbzahl von > 20 mg Iod/100 ml.

$^1$H-NMR (CDCl$_3$) : δ 0,75 (m, 6 H, Si-(C$\underline{H}_2$)-(CH$_2$)-(CH$_2$)-S), 1,22 (t, $^3$J(HH)= 14 Hz, 18 H, Si-O-CH$_2$-CH$_3$), 1,72 - 1,95 (m, 6 H, Si-(CH$_2$)-(C$\underline{H}_2$)-(CH$_2$)-S), 2,65 - 3,06 (m, Si-(CH$_2$)-(CH$_2$)-(C$\underline{H}_2$)-S), 3,82 (q, $^3$J(HH)= 14 Hz, 12 H, Si-O-C$\underline{H}_2$-CH$_3$).

Beispiel 8:

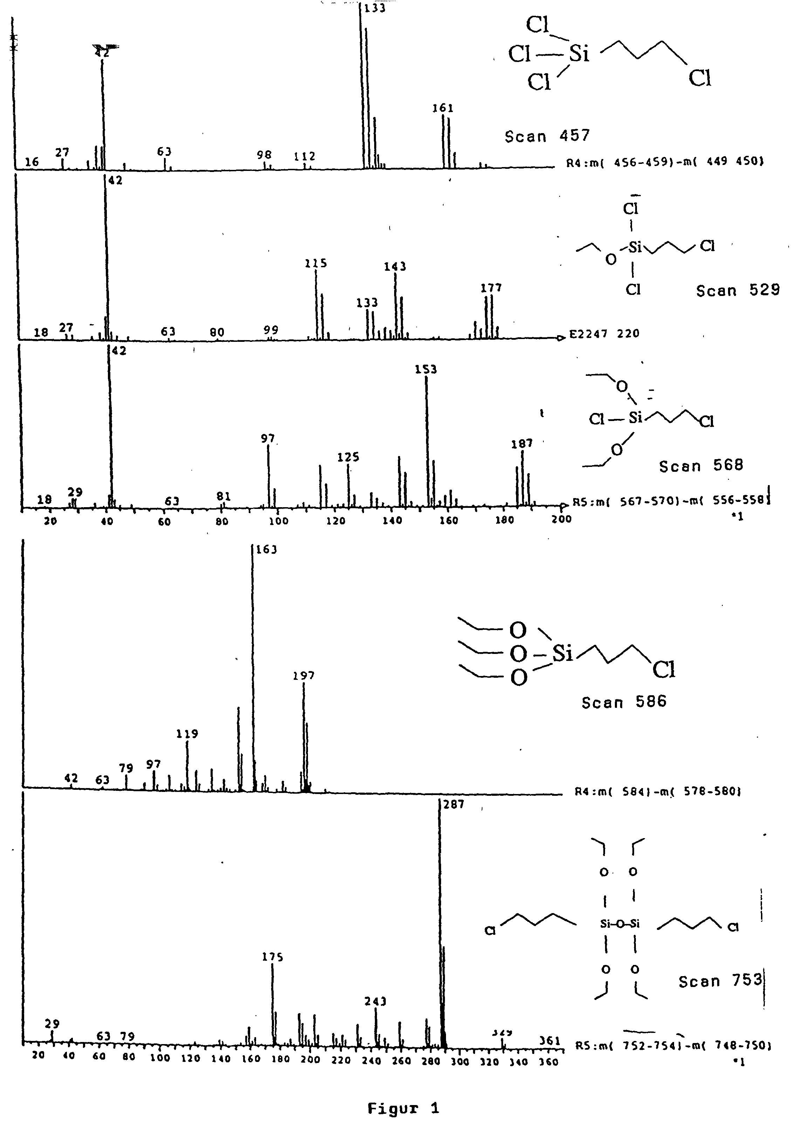

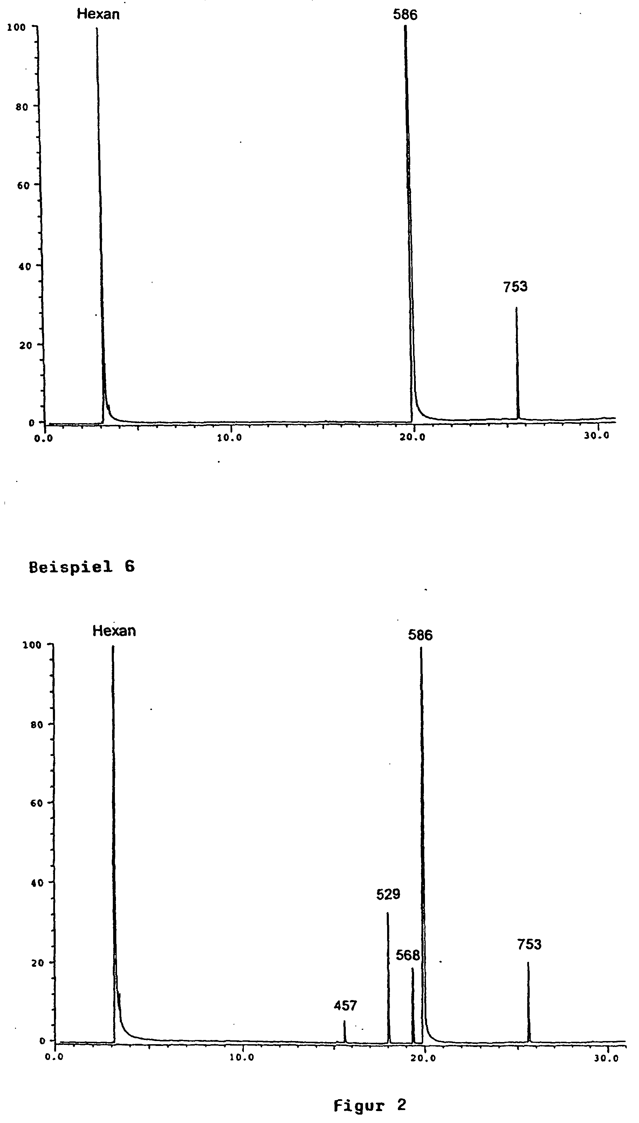

Bei Raumtemperatur werden zu 20 ml Chlorpropyltriethoxysilan (neutral) 5 ml Chlorpropyltrichlorsilan getropft. Anschließend wird 1 h lang bei 80 °C gerührt. Nach Abkühlen auf Raumtemperatur werden vom erhaltenen Reaktionsgemisch und zur Kontrolle vom eingesetzten Chlorpropyltriethoxysilan (neutral) GC-MS Spektren aufgenommen (Figur 1 und 2). Die Zugabe von Chlorpropyltrichlorsilan zu neutralem Chlorpropyltriethoxysilan führt zur Bildung von Chlorpropylmonochlordiethoxysilan und Chlorpropyldichlormonoethoxysilan.

GC: HP 5890 II; MS: Finnigan MAT 95; Säule: 30 m x 0,25 mm DB-5MS; df: 0,25 μm U026; Helium: 80 kPa; Temp.: 50(5)-5-100-15-300(10); Split: 100 ml/min; Inj.vol.: 0,1 μl gelöst in n-Hexan.

Die Iodfarbzahl wird nach DIN 6162 bestimmt.

## Patentansprüche

1.  Verfahren zur Herstellung von gelbem Bis(3-[triethoxysilyl]propyl)tetrasulfan mit einer Iodfarbzahl von ≤ 10 mg Iod/ 100 ml, **dadurch gekennzeichnet, daß** man zu neutralem Chlorpropyltriethoxysilan Chlorpropyltrichlorsilan gibt und anschließend mit Natriumpolysulfid oder Na$_2$S und Schwefel in Ethanol umsetzt.

2.  Verfahren nach Anspruch 1, **dadurch gekennzeichnet, daß** man Chlorpropyltrichlorsilan in einer Menge von 0,1 - 20 Gew.-% zugibt.

3.  Verfahren nach Anspruch 1, **dadurch gekennzeichnet, daß** man die Reaktionsmischung vor Zugabe von Natriumpolysulfid oder Na$_2$S und Schwefel auf 20 - 90 °C erwärmt.

## Claims

1.  Process for the preparation of yellow bis(3-[triethoxysilyl]propyl)tetrasulfane having an iodine colour value of ≤ 10 mg of iodine/100 ml, **characterised in that** chloropropyltrichlorosilane is added to neutral chloropropyltriethoxysilane and reaction with sodium polysulfide or with Na$_2$S and sulfur in ethanol is then carried out.

2.  Process according to claim 1, **characterised in that** chloropropyltrichlorosilane is added in an amount of from 0.1 to 20 wt.%.

3.  Process according to claim 1, **characterised in that** the reaction mixture is heated to from 20 to 90°C before the addition of sodium polysulfide or of Na$_2$S and sulfur.

**Revendications**

1. Procédé pour la production de bis(3-[triéthoxysilyl]propyl)tétrasulfane d'un indice de couleur d'iode ? 10 mg/100 ml, **caractérisé en ce qu'**
on ajoute du chloropropyltrichlorosilane à du chloropropyltriétoxysilane neutre et on fait ensuite réagir avec du polysulfure de sodium ou du Na$_2$ S et du soufre dans l'éthanol.

2. Procédé selon la revendication 1 **caractérisé en ce qu'**
on ajoute le chloropropyltrichlorosilane dans une proportion de 0,1 - 20 % en poids.

3. Procédé selon la revendication 1, **caractérisé en ce qu'**
on chauffe le mélange réactionnel à 20 - 90 °C avant addition du polysulfure de sodium ou du Na$_2$ S et du soufre.

Figur 1

Beispiel 6

Figur 2

7